# EUROPEAN PATENT APPLICATION

(11) **EP 1 755 343 A1**
(43) Date of publication of application: **21.02.2007**
(21) Application number: 05820280.5
(22) Date of filing: 20.12.2005
(51) Int. Cl.: H04N 7/26

(54) **SIGNAL REPRODUCING DEVICE**

(30) Priority: 12.05.2005 JP 2005140192
(71) Applicant: MATSUSHITA ELECTRIC INDUSTRIAL CO., LTD., Osaka 571-8501 (JP)
(72) Inventor: MATSUI, Tomoko Matsushita El.Industrial Co.,Ltd., Osaka 540-6319 (JP); YAMAGUCHI, Ryoji Matsushita El.Industrial Co.,Ltd., Osaka 540-6319 (JP); HOASHI, Katsumi Matsushita El.Industrial Co.,Ltd., Osaka 540-6319 (JP)
(74) Representative: Grünecker, Kinkeldey, Stockmair & Schwanhäusser Anwaltssozietät
(86) International application number: PCT/JP2005/023332
(87) International publication number: WO 2006/120778

(57) **Abstract**

A decode control section 103 sets allocated times required for decoding a plurality of coded streams in processing units based on input stream information on the plurality of coded streams. A decode section 101 decodes the plurality of coded streams while switching the input between the plurality of coded streams based on the allocated times.

## Description

### TECHNICAL FIELD

The present invention relates to a signal playback device for playing back a compression-coded stream.

### BACKGROUND ART

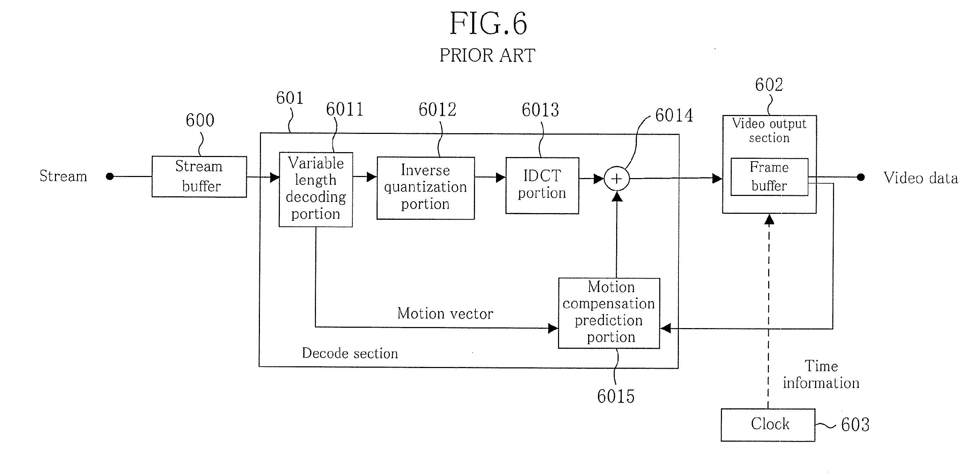

FIG. **6** is a block diagram of a conventional signal playback device for decoding a bit stream compressed under an MPEG coding scheme. As shown in FIG. **6,** the signal playback device includes: a stream buffer **600** for temporarily storing an input stream; a decode section **601** for decoding the input stream stored in the stream buffer **600;** a video output section **602** for outputting data decoded in the decode section **601** as video data; and a clock **603** for outputting time information to the video output section **602.**

The decode section **601** includes a variable length decoding portion **6011,** an inverse quantization portion **6012,** an IDCT portion **6013,** an adder **6014** and a motion compensation prediction portion **6015.** Hereinafter, these components will be described individually.

The variable length decoding portion **6011** receives a coded stream stored in the stream buffer **600** and decodes coded information of each macro-block of 16 × 16 pixels, such as the coding mode, the motion vector, the quantized value and the quantized DCT coefficient, according to the MPEG coding scheme.

The inverse quantization portion **6012** receives the quantized value and the quantized DCT coefficient output from the variable length decoding portion **6011,** performs inverse quantization in block units of 8 × 8 pixels, and outputs the resultant DCT coefficient.

The IDCT portion **6013** receives the DCT coefficient output from the inverse quantization portion **6012,** performs inverse DCT for the DCT coefficient, and outputs the resultant pixel data.

The adder **6014** receives the pixel data output from the IDCT portion 6013 and predicted image data output from the motion compensation prediction portion 6015 and adds these pieces of data to produce image data, The image data is output to the video output section **602.**

The motion compensation prediction portion **6015** produces predicted image data from a reference image in a frame buffer of the video output section **602** to be described later and motion vector information output from the variable length decoding portion **6011,** and outputs the predicted image data to the adder **6014.**

The video output section **602,** having the frame buffer that can store a plurality of frames, outputs video data in the frame buffer in synchronization with the time information output from the clock **603.**

As described above, in the conventional signal playback device, one signal playback device is necessary for decoding one stream. For processing of a plurality of streams, therefore, a plurality of signal playback devices are necessary and this increases the circuit area and the cost.

To solve the above problem, Patent Literature 1 discloses a playback method in which a stream obtained by time-division multiplexing a plurality of streams is input together with a control signal for demultiplexing the stream, the input multiplexed stream is decoded in a time-division manner with one decode section while being demultiplexed again, and the decoded results are output. Switching between decoders is made in macro-block units, for example.
Patent Literature 1: Japanese Laid-Open Patent Publication No. 2000-165816

### DISCLOSURE OF THE INVENTION

### Problems to be solved by the Invention

However, the playback method described above has the following problems. Since this method has a premise that a multiplexed stream made of a plurality of input streams is received as the input, input of a plurality of individual streams is not allowed.

Also, in a signal playback device for decoding a bit stream compressed under an MPEG coding scheme, decoded images are temporarily stored in a frame buffer, but to continue playback in sequence, decoded images must be output at fixed display timing. Therefore, if optimal time allocation is not made in the time-division decoding, this will adversely affect the output. Moreover, even if optimal time allocation is successfully made, decoding may be delayed depending on the stream supply state.

In view of the above, an object of the present invention is providing a signal playback device that decodes a plurality of individual streams in a time-division manner and outputs decoded data of the plurality of streams simultaneously, in which the processing time allocated for decoding one stream can be optimally determined according to the input stream.

### Means for Solving the Problems

The present invention is a signal playback device for receiving N (N is a natural number) independent coded streams and decoding the N coded streams in a time-division manner while switching the N coded streams to each other, the device including:
stream buffers for storing the N coded streams respectively;
decode means for decoding the coded streams in predetermined processing units and outputting resultant decoded data;
video output means having frame buffers for storing N pieces of decoded data of the N coded streams respectively;
a first switch provided between the stream buffers and the decode means;
a second switch provided between the decode means and the video output means; and
decode control means for receiving input stream information on the N coded streams and outputting a switching signal for controlling switch operations of the first and second switches based on the received input stream information,
wherein the first switch is configured to selectively output the coded streams stored in the stream buffers based on the switching signal received,
the second switch is configured to switch output destinations of the decoded data output from the decode means to each other based on the switching signal received so that the decoded data can be stored in the corresponding frame buffers, and
the decode control means is configured to receive input stream information on the N coded streams and while setting allocated times required for decoding the coded streams in processing units based on the input stream information, output the switching signal to the first and second switches once the allocated time has passed.

### Effect of the Invention

As described above, according to the present invention, in decoding a plurality of individual coded streams with a decode means in a time-division manner while switching these coded streams to each other, allocated times required for decoding the plurality of coded streams in processing units are set based on input stream information on the plurality of coded streams. Based on the allocated times, the input is switched between the plurality of coded streams. Hence, the processing time for each of the plurality of coded streams can be secured, and thus the work efficiency improves without being affected by delay in decoding of any other coded stream.

Also, if decoding of a picture as a processing unit has not been completed within the allocated time, the processing is continued until processing of a slice composed of a plurality of macro-blocks is completed. Once all the macro-blocks in the slice have been processed, the decoding is suspended, and the processing is switched to the next stream to be processed. By following this procedure, in resuming the decoding of the coded stream, the decoding can be restarted from the next slice position of the coded stream of which decoding was suspended previously.

As described above, by switching the stream for decoding to another by the processing sub-unit for coding such as the slice and the macro-block, not by the time, the decoding can be easily controlled.

### BRIEF DESCRIPTION OF THE DRAWINGS

[FIG. **1]** FIG. **1** is a block diagram of a signal playback device of an embodiment of the present invention.
[FIG. **2]** FIG. **2** is a view showing an example of operation timing of the signal playback device of the embodiment of the present invention.
[FIG. **3]** FIG. **3** is a view showing another example of operation timing of the signal playback device of the embodiment.
[FIG. **4]** FIG. **4** is a view showing yet another example of operation timing of the signal playback device of the embodiment.
[FIG. **5]** FIG. **5** is a view showing operation followed when decoding is suspended in the signal playback device of the embodiment.
[FIG. 6] FIG. **6** is a block diagram of a conventional signal playback device.

### Description of reference numerals

- 100: Stream buffer
- 101: Decode section
- 102: Video output section
- 103: Decode control section
- 104: Switch
- 105: Switch
- 106: Switch
- 1001: Buffer
- 1002: Buffer
- 1021: Frame buffer
- 1022: Frame buffer
- 1031: Clock
- 1032: Switch control portion

### BEST MODE FOR CARRYING OUT THE INVENTION

Hereinafter, an embodiment of the present invention will be described with reference to the relevant drawings. Note that the following description of preferred embodiment is essentially a mere illustration and by no means intended to restrict the present invention, applications thereof or uses thereof.

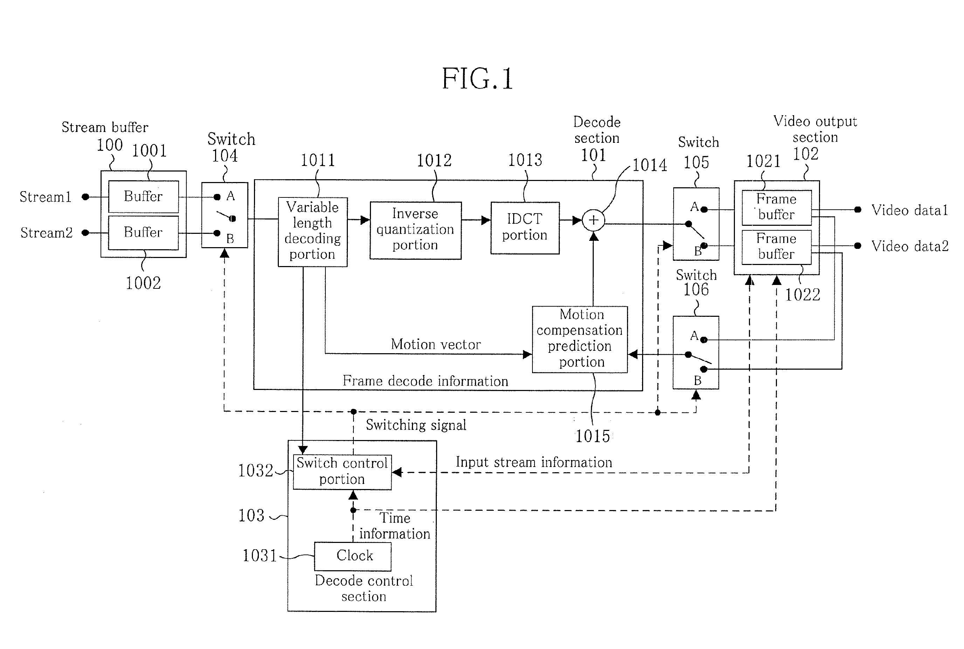

FIG. **1** is a block diagram of a signal playback device of an embodiment of the present invention. As shown in FIG. **1,** the reference numeral **100** denotes a stream buffer. Two bit streams 1 and 2 are input into the stream buffer **100** and respectively stored in buffers **1001** and **1002** of the stream buffer **100.** In this embodiment, assume that the input bit streams are video streams compressed under an MPEG2 scheme.

Only one of the streams 1 and 2 stored in the buffers **1001** and **1002** of the stream buffer **100** is selected with a switch **104** and output to a decode section **101.**

More specifically, signal output paths in the switch **104** are selectively switch to each other based on a switching signal output from a decode control section **103** to be described later, so that only the selected stream is output to the decode section **101.**

The decode section **101** includes a variable length decoding portion **1011,** an inverse quantization portion **1012,** an IDCT portion **1013,** an adder **1014** and a motion compensation prediction portion 1015. Hereinafter, the functions of these components will be described individually.

The variable length decoding portion **1011** receives the stream data selectively output from the switch **104,** and decodes coded information of each macro-block of 16 x 16 pixels, such as the coded mode, the motion vector, the quantized value and the quantized DCT coefficient, according to the MPEG coding scheme.

The inverse quantization portion **1012** receives the quantized value and the quantized DCT coefficient output from the variable length decoding portion **1011,** performs inverse quantization in block units of 8 × 8 pixels, and outputs the resultant DCT coefficient.

The IDCT portion **1013** receives the DCT coefficient output from the inverse quantization portion **1012,** performs inverse DCT processing for the DCT coefficient, and outputs the resultant pixel data.

The adder **1014** receives the pixel data output from the IDCT portion **1013** and predicted image data output from the motion compensation prediction portion **1015** to be described later, and adds these pieces of data to produce image data. The image data is output to a video output section **102** via a switch **105.**

The motion compensation prediction portion **1015** produces the predicted image data from a reference image output from a switch **106** to be described later and motion vector information output from the variable length decoding portion **1011.** The predicted image data is input into the adder **1014.**

The switch **105** selectively changes the output destination of the image data output from the decode section **101.** More specifically, signal output paths in the switch **105** are selectively switched to each other based on the switching signal output from the decode control section **103** to be described later, so that the image data is output to one of frame buffers **1021** and **1022** of the video output section **102.**

The video output section **102** has a plurality of frame buffers corresponding to the respective input streams. In this embodiment, two frame buffers **1021** and **1022** corresponding to the two streams 1 and 2 are provided. Assume herein that the decode result of the stream 1 is stored in the frame buffer **1021** and the decode result of the stream 2 is stored in the frame buffer **1022.** The frames stored in the frame buffers **1021** and **1022** are output according to the format of the input streams.

The switch **106** is provided for reading reference frames stored in the frame buffers **1021** and **1022** of the video output section **102,** in which signal output paths are selectively switched to each other based on the switching signal output from the decode control section **103** to be described later, so that one of the reference frames stored in the frame buffers **1021** and **1022** is output to the motion compensation prediction portion **1015.**

The decode control section **103** includes a clock **1031** for generating time information indicating the reference time of the operation of the signal playback device and a switch control portion **1032.**

The switch control portion **1032** determines switching timing based on the time information output from the clock **1031,** input stream information including information such as the resolution, format and playback method of the input stream, and decode information output from the variable length decoding portion **1011,** and outputs the switching signal. This switching signal is supplied to the switches **104, 105** and **106** as described above.

When the switching signal is input into the switches **104, 105** and **106,** contact A is connected if the stream 1 is processed or contact B is connected if the stream 2 is processed.

The decode information is decode progress information on a stream currently being processed, including macro-block processing completion notification and frame processing completion notification.

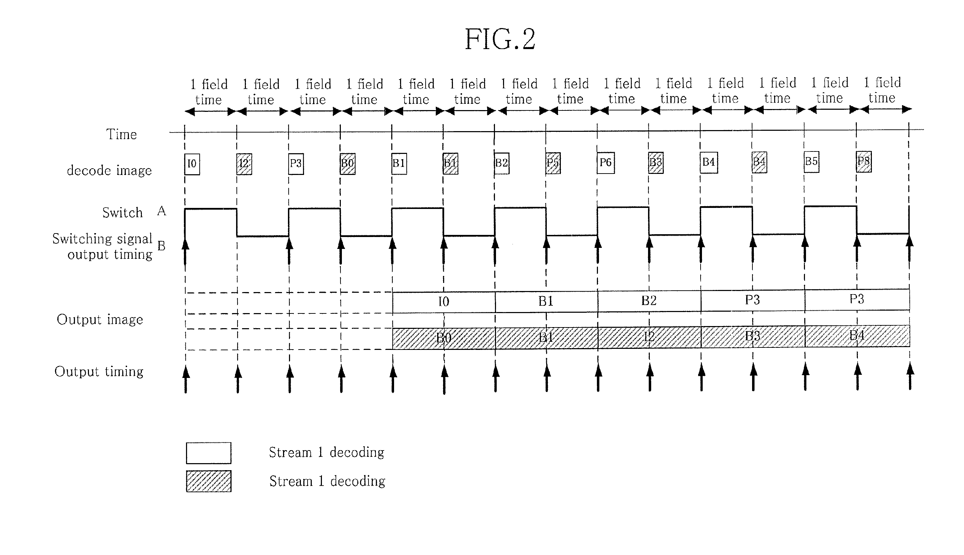

Next, the operation timing of the signal playback device of this embodiment will be described with reference to **FIG. 2.** Assume that in this embodiment the decode section **101** has processing performance capable of decoding two frames of an MP@HL bit stream within one frame (two fields for "interlaced" and one frame for "progressive") display time.

In the following description, note that basically one frame of each of the two input streams is decoded within one frame display time. Otherwise, it is also possible to decode the largest amount of frames that can be processed within the processing time allocated to one stream.

FIG. **2** shows processing operation followed when the input streams 1 and 2 are bit streams of MPEG2 MP@ML 480I interlaced signals. As the input stream information, the following information is input into the switch control portion **1032.**

Stream 1 = MPEG2 MP@ML, 480I, single-speed playback
Stream 2= MPEG2 MP@ML, 480I, single-speed playback
In this case, in which both the input streams 1 and 2 are interlaced MP@ML streams, the switch control portion **1032** allocates one frame display time equally to the decoding times of the two streams, and based on the time information from the clock **1031,** the switching signal is output to the switches **104, 105** and **106** every field time (16.5 msec). Thus, the stream input into the decode section **101** is switched between the streams 1 and 2, like stream 1, stream 2, stream 1, ... every field time.

Once receiving a stream, the decode section **101** decodes one frame of the stream. More specifically, the variable length decoding portion **1011** performs the decoding according to the MPEG2 coding scheme and simultaneously notifies the switch control portion **1032** of macro-block processing completion and frame processing completion.

The video output section **102** outputs the image data stored in the frame buffers in field units in the order of display according to the time information from the clock **1031.** Note that if the input stream is "progressive", the image data will be output in frame units.

As described above, each frame of two streams is decoded within one field time while the two streams are switched to each other based on the control signal from the decode control section **103.** In this way, the two streams can be output from the video output section **102** simultaneously and sequentially. Note that when the streams 1 and 2 are both MPEG2 MP@HL, also, equally allocated decoding times may be given.

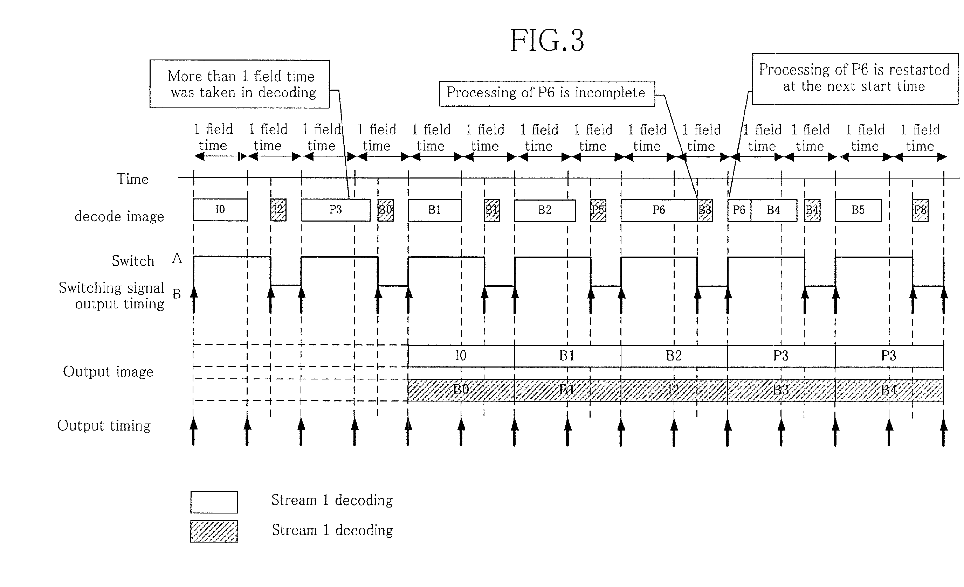

FIG. **3** shows processing operation followed when the input stream 1 is a bit stream of MPEG2 MP@HL 10801 interlaced signal and the input stream 2 is a bit stream of MPEG2 MP@ML 4801 interlaced signal. As the input stream information, the following information is input into the switch control portion **1032.**

Stream 1 = MPEG2 MP@HL, 1080I, single-speed playback
Stream 2= MPEG2 MP@ML, 480I, single-speed playback
In this case, in which the input stream 1 is an MP@HL stream and the input stream 2 is an MP@ML stream, the switch control portion **1032** allocates one frame display time to the streams 1 and 2 based on the processing performance of the decode section **101.**

As described earlier, the processing performance of the decode section **101** in this embodiment is such that two frames of an MP@HL stream can be processed within one frame display time. Therefore, as long as the stream is supplied smoothly, decoding of one frame of the stream 1 is completed within one field time. However, if the stream supply is delayed causing delay of the decode time, the decoding may not be completed within one field time.

On the contrary, decoding of the stream 2 as an MP@ML stream will presumably be completed within one field time sufficiently even if an underflow occurs.

In consideration of the above, the allocated times for the streams 1 and 2 are preferably set at 1.5 field times and 0.5 field times, respectively.

In the illustrated example, as for decode image P6, it is found that the stream 1 had a decode delay and decoding thereof was not completed within the allocated time for the stream 1. In this case, the switch control portion **1032** does not issue the switching signal although one field time has passed and the processing start time for the stream 2 has come.

The switch control portion **1032** then recognizes macro-block processing completion notification from the variable length decoding portion **1011.** At this point, the switch control portion **1032** saves information required when the decoding is to be restarted, such as macro-block information like macro-block position information (MBWidth and MBHeight) and the motion vector, as decode parameters. After the saving of the necessary information, the switch control portion **1032** issues the switching signal.

The switches **104, 105** and **106** then respectively switch the connection to the contact B for processing of the stream 2, to thereby start decoding of B6 of the stream 2.

Once the decode time for the stream 2 has passed, the switch control portion **1032** confirms completion of the decoding of B6 and issues the switching signal.

Based on the switching signal, the switches **104, 105** and **106** respectively switch the connection to the contact A for processing of the stream 1, to start decoding from the macro-block of the stream 1 of which decoding was suspended midway.

At this time, the variable length decoding portion **1011** is still set for decoding of the stream 2. It is therefore necessary to resume the variable length decoding portion 1011 to the state of the midway-suspended decoding of the stream 1. In other words, the previously saved decode parameters are set again in the variable length decoding portion **1011,** so that P6 and then B4 are decoded.

As described above, if decoding has not been completed due to delay of an input processing system, the processing must be suspended midway. However, in time-division decoding, by suspending the decoding in processing units, the decoding can be restarted at the next timing.

In the case that the streams 1 and 2 are both MPEG2@HL streams, also, if one of the streams is displayed on a small screen, in which the data processing amount can be small, priority may be given to the other stream in allocation of the decode time. In this way, decoding can be made efficiently.

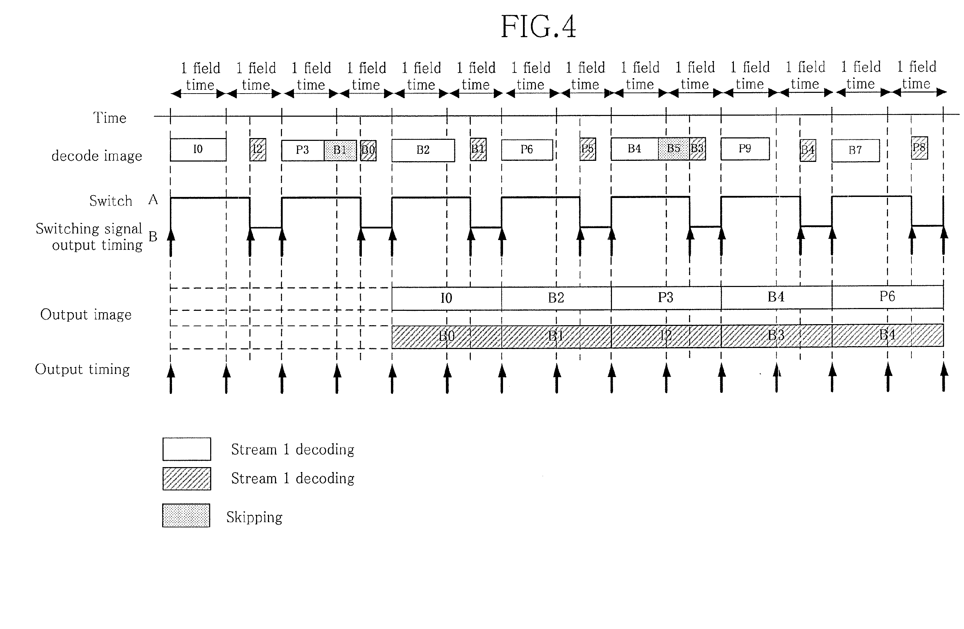

FIG. **4** shows processing operation followed when the input stream 1 is a bit stream of MPEG2 MP@HL 1080I and the input stream 2 is a bit stream of MPEG2 MP@ML 480I, and the stream 1 is played back at high speed. As the input stream information, the following information is input into the switch control portion 1032.

Stream 1 = MPEG2 MP@HL, 1080I, single-speed playback
Stream 2= MPEG2 MP@ML, 480I, single-speed playback
The switch control portion **1032** allocates one frame display time to the two streams 1 and 2 based on the processing performance of the decode section **101.** In the example shown in FIG. **4,** the stream 1 is played back at double speed and thus one every two frames is skipped. It is therefore necessary to determine the time allocation considering this point.

As described earlier, the processing performance of the decode section **101** in this embodiment is such that two frames of an MP@HL stream can be processed within one frame display time. Therefore, even if the stream is supplied smoothly, the processing time for the stream 1 is long.

In consideration of the above, the allocated times for the streams 1 and 2 are preferably set at 1.5 field times and 0.5 field times, respectively. The processing operation in this embodiment is substantially the same as that described above with reference to FIG. **2** or **3,** and thus the description thereof is omitted here.

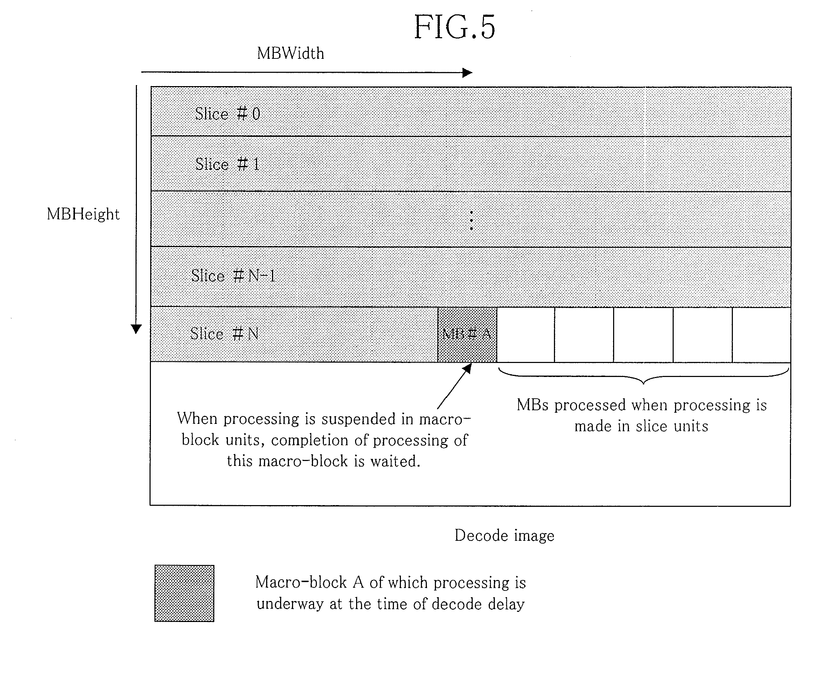

FIG. **5** is a view showing operation followed when decoding is suspended. As shown in FIG. **5,** in the signal playback device of this embodiment, in which decoding is performed in macro-block units, if the allocated time has passed during processing of MB#A, for example, the switch control portion **1032** waits until completion of the processing of MB#A.

Thereafter, the switch control portion **1032** acquires the decode information from the variable length decoding portion **1011.** More specifically, information required when the decoding is next restarted, such as macro-block information like macro-block position information (MBWidth and MBHeight) and the motion vector, is saved. Once the decoding is next restarted, these parameters are set again in the variable length decoding portion **1011.**

The switching of the decoding may be made, not in macro-block units, but in slice units. Since each slice is independent from others, saving of macro-block information is unnecessary. Thus, advantageously, the switching between the streams will be more simplified.

In the switching of decoding in slice units, processing will be started from the head of the currently-processed slice. In this case, the start position of the slice will be the information required to restart the decoding. To restart the decoding, it is only necessary to protect the bit stream data in the stream buffer **100** from being rewritten.

In the embodiment of the present invention, the case of inputting two streams was described. The present invention is not limited to this, but the number of input streams may be determined based on the relationship between the decoding performance of the decode section **101** and the input stream information. In this case, necessary numbers of buffers and frame buffers may be additionally provided.

In this embodiment, the switch control portion **1032** determined the time allocation based on the processing time of one picture of each input stream. The present invention is not limited to this, but the time allocation may be determined based on the performance of the decode section **101,** the number of input streams and the input stream information.

In this embodiment, decoding of the stream 2 was started after the lapse of the allocated time for the stream 1. The present invention is not limited to this, but decoding of the stream 2 may be started immediately after completion of the processing of one frame of the stream 1. By starting in this way, a longer time can be allocated to the stream 2 if the stream 1 is an MP@ML stream and the stream 2 is an MP@HL stream.

In this embodiment, an MPEG2 coded stream was input. The present invention is not limited to this, but any hierarchically coded stream may be input.

### INDUSTRIAL APPLICABILITY

As described above, the signal playback device of this invention has a highly practical effect that the processing time allocated to decoding of one stream can be determined optimally according to the input stream, and thus is significantly useful and high in industrial applicability. Such a signal playback device is usable as a playback device for signals recorded on optical disks and hard disks and also as a playback device for digital TV sets and the like.

## Claims

1. A signal playback device for receiving N (N is a natural number) independent coded streams and decoding the N coded streams in a time-division manner while switching the N coded streams to each other, the device comprising:
stream buffers for storing the N coded streams respectively;
decode means for decoding the coded streams in predetermined processing units and outputting resultant decoded data;
video output means having frame buffers for storing N pieces of decoded data of the N coded streams respectively;
a first switch provided between the stream buffers and the decode means;
a second switch provided between the decode means and the video output means; and
decode control means for receiving input stream information on the N coded streams and outputting a switching signal for controlling switch operations of the first and second switches based on the received input stream information,
wherein the first switch is configured to selectively output the coded streams stored in the stream buffers based on the switching signal received,
the second switch is configured to switch output destinations of the decoded data output from the decode means to each other based on the switching signal received so that the decoded data can be stored in the corresponding frame buffers, and
the decode control means is configured to receive input stream information on the N coded streams and while setting allocated times required for decoding the coded streams in processing units based on the input stream information, output the switching signal to the first and second switches once the allocated time has passed.

2. The signal playback device of Claim 1, wherein the input stream information includes at least one among resolution information of each of the N coded streams, playback mode information indicating special playback including skipping and freezing, and frame rate information defining interlaced and progressive display rates.

3. The signal playback device of Claim 1, wherein the decode control means further has a function of, if decoding of a processing unit of any of the coded streams is completed before the lapse of the allocated time, outputting the switching signal immediately after the completion of the decoding.

4. The signal playback device of Claim 1, wherein the decode control means further has a function of, if a processing unit of any of the coded streams has not been completed within the allocated time, outputting the switching signal after decoding of a processing sub-unit constituting the processing unit, of which decoding is underway at the expiration of the allocated time, is completed and decoding information on the processing sub-unit is saved.

5. The signal playback device of Claim 4, wherein the decode means is configured so that
if decoding of a processing unit of an input coded stream has been completed within the allocated time in the immediately-preceding decoding, the decode means starts decoding of the next processing unit, and
if decoding of a processing unit of an input coded stream has not been completed within the allocated time in the immediately-preceding decoding, the decode means restarts the decoding of the processing unit of which decoding has not been completed based on the decoding information saved in the immediately-preceding decoding.

6. The signal playback device of Claim 4, wherein the processing sub-unit is a slice composed of a plurality of macro-blocks as the minimum units of coding, and
the decoding information is picture information and slice information.

7. The signal playback device of Claim 4, wherein the processing sub-unit is a macro-block as the minimum unit of coding, and
the decoding information is picture information, slice information and macro-block information.

8. The signal playback device of Claim 1, wherein the decode control means further has a function of, if decoding of a processing unit of any of the coded streams has not been completed within the allocated time, outputting the switching signal after decoding information on a processing sub-unit constituting the processing unit, of which decoding has been completed at the expiration of the allocated time, is saved.

9. The signal playback device of Claim 8, wherein the decode means is configured so that
if decoding of a processing unit of an input coded stream has been completed within the allocated time in the immediately-preceding decoding, the decode means starts decoding of the next processing unit, and
if decoding of a processing unit of an input coded stream has not been completed within the allocated time in the immediately-preceding decoding, the decode means restarts the decoding of the processing unit of which decoding has not been completed based on the decoding information saved in the immediately-preceding decoding.

10. The signal playback device of Claim 8, wherein the processing sub-unit is a slice composed of a plurality of macro-blocks as the minimum units of coding, and
the decoding information is picture information and slice information.

11. The signal playback device of Claim 8, wherein the processing sub-unit is a macro-block as the minimum unit of coding, and
the decoding information is picture information, slice information and macro-block information.

12. The signal playback device of Claim 1, wherein the processing unit is composed of M (M is a natural number) pictures.

13. The signal playback device of Claim 1, wherein the N coded streams are hierarchically coded streams.
